# EUROPÄISCHE PATENTSCHRIFT

(11) **EP 3 310 611 B1**
(45) Veröffentlichungstag und Bekanntmachung des Hinweises auf die Patenterteilung: **05.02.2020**
(21) Anmeldenummer: 16729893.4
(22) Anmeldetag: 15.06.2016
(51) Int. Cl.: B60N 2/20, B60N 2/02

(54) **FAHRZEUGSITZ**
VEHICLE SEAT
SIÈGE DE VÉHICULE

(30) Priorität: 19.06.2015 DE 102015211397; 18.08.2015 DE 102015215686
(43) Veröffentlichungstag der Anmeldung: 25.04.2018
(73) Patentinhaber: Adient Luxembourg Holding S.à r.l., 1855 Luxembourg (LU)
(72) Erfinder: GRUEDL, Peter, 52428 Juelich (DE); CEVIK, Murat, 51103 Köln (DE); PINEYRO, Anna, W140BL London (GB); SCHUHMACHER, Gerd, 42369 Wuppertal (DE)
(74) Vertreter: Liedhegener, Ralf
(86) Internationale Anmeldenummer: PCT/EP2016/063763
(87) Internationale Veröffentlichungsnummer: WO 2016/202863

(56) Entgegenhaltungen:
- WO-A2-2010/080178
- US-A- 4 853 687
- US-A1- 2011 301 809

## Beschreibung

Die Erfindung betrifft einen Fahrzeugsitz mit den Merkmalen des Oberbegriffs des Anspruchs 1.

### Stand der Technik

Es sind Fahrzeugsitze einer vorderen Sitzreihe eines Kraftfahrzeuges bekannt, welche ein Sitzkissen sowie eine Lehne aufweisen.

Im Falle eines lediglich dreitürigen Kraftfahrzeuges kann der Fahrzeugsitz von einer sogenannten Gebrauchsposition, in welcher ein Insasse des Kraftfahrzeuges in dem Fahrzeugsitz platznehmen kann, in eine vorgeschwenkte, sogenannte Nichtgebrauchsposition, welche allgemein auch als Easy-Entry-Position bezeichnet wird, überführt werden. Hierzu weisen bekannte Fahrzeugsitze, meist in einem oberen Bereich der Lehne einen Handgriff auf, welcher in an sich bekannter Weise mittels eines Bowdenzuges mit einer Lehnenverriegelung des Fahrzeugsitzes verbunden ist. Mittels einer Betätigung des Handgriffes lässt sich die Lehnenverriegelung des Fahrzeugsitzes öffnen und der Fahrzeugsitz anschließend in eine in Fahrtrichtung vorgelagerte Nichtgebrauchsstellung überführen. Hierdurch wird dem Benutzer oder Insassen ein vergrößerter Raum zum Einsteigen und Aussteigen, insbesondere in oder aus einer hinteren Sitzreihe, bereitgestellt.

Zum Bedienen des Handgriffs benötigt der Benutzer und/oder der Insasse jedoch wenigstens eine freie Hand sowie die Fähigkeit den Handgriff mit einer entsprechend benötigten Kraft zu bedienen. Dies kann für verletzte Personen, alte Personen, Kinder, oder Personen die ein Transportgut, wie beispielsweise einen Karton mit Lebensmitteln, in den Händen halten und dieses auf der hinteren Sitzreihe abstellen möchten, nur umständlich und unter erschwerten Bedingungen möglich sein.

Aus der US 2011/0301809 A1 ist eine Sitzanordnung bekannt, welche ein Sitzteil und eine Lehne, welche sich in der Nähe des Sitzteils befindet, umfasst. Ein Verriegelungsmechanismus ist zwischen dem Sitzteil und der Lehne angeordnet und ist konfiguriert, um selektiv eine Bewegung der Lehne relativ zum Sitzteil zu verhindern. Ein Verriegelungsfreigabeschalter ist an der Sitzanordnung positioniert. Ein Controller ist mit dem Verriegelungsfreigabeschalter und einem Verriegelungsfreigabeaktuator verbunden und ist konfiguriert, bei Betätigung des Verriegelungsfreigabeschalters den Verriegelungsfreigabeaktuator zu aktivieren, um den Verriegelungsmechanismus in eine gelöste Position zu bewegen, um eine Relativbewegung zwischen dem Sitzteil und der Lehne zu ermöglichen.

Aus der WO 2010/080178 A2 ist ein Fluggastsitz bekannt, mit einer Sitzbasis und einer mittels eines Beschlags an der Sitzbasis schwenkbar gehaltenen Rückenlehne, wobei eine Kontrolleinheit vorgesehen ist, um die Sitzlehne motorisch angetrieben relativ zur Sitzbasis nach hinten zu verschwenken.

### Aufgabe

Der Erfindung liegt die Aufgabe zu Grunde, einen Fahrzeugsitz der eingangs genannten Art zu verbessern, insbesondere eine intuitive Bedienbarkeit sowie unkomplizierte Möglichkeit der Betätigung für einen Fahrzeugsitz bereitzustellen.

### Lösung

Diese Aufgabe wird erfindungsgemäß gelöst durch einen Fahrzeugsitz, insbesondere einen Kraftfahrzeugsitz, mit einem Sitzteil und einer Lehne, wobei in einer Polsterung der Lehne eine Bedienvorrichtung vorgesehen ist, und wobei die Bedienvorrichtung ein Anzeigeelement und eine berührungssensitive Eingabeeinrichtung umfasst und die Bedienvorrichtung in einem oberen Bereich der Lehne und/oder im Bereich einer einer hinteren Sitzreihe zugewandten Seite der Lehne des Fahrzeugsitzes angeordnet ist. Hierdurch lassen sich Mittel zur intuitiven Bedienung bereitstellen. Zudem sind zur Betätigung einer berührungssensitiven Eingabeeinrichtung erheblich weniger Kraft, sowie eine dauerhafte Betätigung erforderlich, als vergleichsweise bei einem herkömmlichen Handgriff.

Unter einer "berührungssensitiven Eingabeeinrichtung" im Sinne der Erfindung wird allgemein eine Vorrichtung zur Eingabe einer Steuerinformation verstanden, welche eine mittels eines Berührungskontaktes ausgeübten Andruckkraft oder eine Berührungsinformation auf resistive und/oder kapazitive Weise erfasst und/oder verarbeitet und ein entsprechendes elektrisches Signal zur Steuerung einer Funktion eines Fahrzeugsitzes beeinflusst.

Hierbei kann es in weiterhin vorteilhafter Weise vorgesehen sein, dass der Fahrzeugsitz insbesondere in der Funktion der Einstellung des Sitzteils und der Lehne relativ zueinander und/oder relativ zu einer Fahrzeugstruktur elektrisch einstellbar ist. Ferner wird hierdurch die Möglichkeit geschaffen, eine Betätigung unterschiedlicher Funktionen zu starten, worauf diese gestartete Funktion automatisch vollständig ausgeführt wird, ohne, dass eine andauernde manuelle Betätigung bis zu einem Endzustand der jeweiligen Funktion erforderlich ist.

Denkbar ist es ebenfalls, dass eine das Anzeigeelement und die Eingabeeinrichtung aufweisende Oberfläche der Bedienvorrichtung in einem Bezug der Polsterung bündig, insbesondere in einer Oberfläche des Bezuges, angeordnet ist, wodurch im Wesentlichen eine Vermeidung einer Kante im Übergang zwischen einem Rand der Eingabeeinrichtung zur umgebenden Polsterung gewährleistet werden kann.

Ferner kann die Bedienvorrichtung in wenigstens einen ersten Bereich und einen zweiten Bereich unterteilt sein. Hierdurch lassen sich der erste Bereich und der zweite Bereich jeweils unterschiedlichen Funktionen zuweisen, wodurch eine klare Aufteilung und eine übersichtliche Anordnung erzielen lassen. Ferner wird eine dem ersten Bereich zugeordnete Funktion und/oder Aufgabe nicht durch eine Betätigung der dem zweiten Bereich zugeordneten Funktion und/oder Aufgabe beeinflusst. Es lässt sich somit vorteilhaft eine sowohl räumliche, als auch funktionale Trennung zwischen dem ersten Bereich und dem zweiten Bereich schaffen.

Hierbei kann das Anzeigeelement und die Eingabeeinrichtung der Bedienvorrichtung ferner jeweils in verschiedenen Bereichen angeordnet sein, bzw. jeweils dem ersten Bereich oder dem zweiten Bereich zugeordnet sein. Dies hat zum Vorteil, dass jeder Flächenabschnitt wahlweise einer Funktion als Flächenabschnitt zur optischen Ausgabe in Form eines Videos, als Flächenabschnitt zur berührungssensitiven Eingabe eines Bewegungsmusters zur Aktivierung, sowie etwa als Flächenabschnitt zur optischen Ausgabe in Form eines Textes, beispielsweise zur Beschreibung eines akzeptablen Bewegungsmusters, entsprechen. Hierdurch lassen sich beispielsweise Fehlbedienungen weitestgehend vermeiden. Für eine optische Ausgabe in Textform lassen sich weiter unterschiedliche Sprachen verwenden, insbesondere in eine Steuersoftware einprogrammieren, so dass die entsprechend dargestellten Informationen für den Benutzer in seiner Muttersprache erfassbar und leichter verständlich sind.

Ferner kann das Anzeigeelement eingerichtet sein, ein festgelegtes, unveränderliches Piktogramm wiederzugeben. Das Anzeigeelement kann hierzu beispielsweise ein einer vorgegebenen Funktion entsprechendes Piktogramm wiedergeben, welches insbesondere das Anzeigeelement durch Aufdrucken, Einprägen oder auf eine andere an sich bekannte Weise dauerhaft, unveränderlich mit einem entsprechend Piktogramm versieht. Piktogramme eigenen sich allgemein besonders gut dazu, Funktionen zu beschreiben, da diese über Ländergrenzen hinweg auch Benutzern unterschiedlicher Sprachen verständlich sein können.

Alternativ kann das Anzeigeelement ein elektronisches Bildschirmelement sein, welches eingerichtet ist, ein Piktogramm oder ein animiertes Symbol oder ein Video wiederzugeben. Hierdurch lassen sich beispielsweise eine Vielzahl an vorbestimmten Funktionen des Fahrzeugsitzes auf dem Anzeigeelement darstellen, ohne dass hierzu eine flächenmäßige Vergrößerung der Bedienvorrichtung erforderlich ist. Zudem kann ein Benutzer und/oder Insasse des Fahrzeugsitzes oder einer hinter dem Fahrzeugsitz befindlichen weiteren Sitzreihe eine Funktion aus einer Mehrzahl an vorgesehenen Funktionen, gegebenenfalls mittels eines Menüs oder einer Liste von Funktionen, auswählen und aktivieren.

Hierbei können das Anzeigeelement und die Eingabeeinrichtung der Bedienvorrichtung, insbesondere zur leichteren Bedienung und Auswahl einer Funktion, ein gemeinsam ausgebildeter Touch-Bildschirm sein, welcher sich in an sich bekannter Weise intuitiv bedienen lässt. Die Bedienvorrichtung mit der berührungssensitiven Eingabeeinrichtung kann dazu eingerichtet sein, eine lokale Berührung und/oder eine kontaktierende Wischbewegung und/oder ein Bewegungsmuster zu erfassen und entsprechend weiter zu verarbeiten. Somit lassen sich ebenfalls durch unterschiedlich programmierte Bewegungsmuster jeweils entsprechende unterschiedliche Funktionen aufrufen und aktivieren. Mittels der zur berührungssensitiven Erfassung von Bewegungsmustern eingerichteten Bedienvorrichtung, lässt sich eine Aktivierung einer entsprechenden Funktion des Fahrzeugsitzes mit sehr wenig Kraftaufwand und sehr komfortabel erreichen. Zur Eingabe eines Bewegungsmusters wird lediglich eine Handbewegung oder gar nur eine Bewegung eines einzelnen Fingers benötigt.

Die Eingabeeinrichtung kann ferner eingerichtet sein, um eine Funktion des Fahrzeugsitzes zu aktivieren und/oder zu deaktivieren und/oder zu steuern. Hierdurch lässt sich mittels der Eingabeeinrichtung eine Betätigung einer Mehrzahl unterschiedlicher Funktionen des Fahrzeugsitzes bereitstellen. Ferner lässt sich über eine bloße Betätigung der Funktionen eine einfache Eingabemöglichkeit zur Steuerung der Funktionen bereitstellen.

Hierbei kann es weiterhin von Vorteil sein, wenn die Funktion des Fahrzeugsitzes eine Sitzlängseinstellung oder eine Easy-Entry-Funktion oder eine Bodenfunktion ist. Die Bedienvorrichtung kann folglich beispielsweise zum Aktivieren eines teilweisen Vorklappens der Lehne und Vorfahrens des Fahrzeugsitzes in eine allgemein als Easy-Entry-Stellung bekannte Position eingesetzt werden. Allgemein ergeben sich durch eine elektrifizierte Aktivierung einer entsprechenden Funktion des Fahrzeugsitzes die Möglichkeiten weitere Kontrollen durch entsprechende softwareseitige oder hardwareseitige Anpassungen vorzunehmen. Derartige Kontrollen oder auch Sicherheitsmechanismen können beispielsweise eine an sich bekannte Funktion einer Kindersicherung oder eine Überprüfung weiterer Bedingungen, wie beispielsweise einer Überprüfung auf eine Blockierung des Bewegungsraumes das Fahrzeugsitzes, darstellen.

Eine vorgeschlagene Bedienvorrichtung kann beispielsweise an einer gut einsehbaren Position in einem der Fahrzeugtür zugewandten, oberen Bereich einer Lehne des Fahrzeugsitzes angeordnet sein. Alternativ oder zusätzlich können gut zugängliche und gut einsehbare Positionen, beispielsweise im Bereich der einer hinteren Sitzreihe zugewandten Seite der Lehne des Fahrzeugsitzes, dienlich sein.

### Figuren und Ausführungsformen der Erfindung

Bevor nachfolgend eine Ausgestaltung der Erfindung eingehender an Hand von Zeichnungen beschrieben wird, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Darstellung eines Fahrzeugsitzes gemäß dem Stand der Technik,
- Fig. 2:: eine schematische Darstellung eines erfindungsgemäßen Fahrzeugsitzes gemäß einer beispielhaften Ausführungsform, und
- Fig. 3:: eine schematische, ausschnittsweise Darstellung einer Lehne des Fahrzeugsitzes aus Fig. 2.

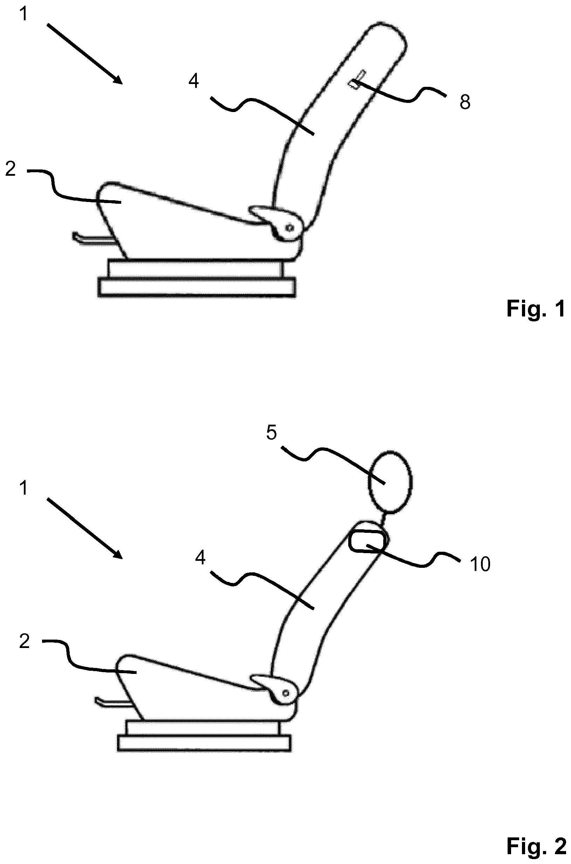

In Fig. 1 ist eine schematische Darstellung eines Fahrzeugsitzes 1 gemäß dem Stand der Technik gezeigt. Der in Fig. 1 dargestellte Fahrzeugsitz 1 weist ein Sitzkissen 2 sowie eine Lehne 4 auf. Bei dem Fahrzeugsitz 1 handelt es sich vorliegend um einen Fahrzeugsitz 1 einer vorderen Sitzreihe eines Kraftfahrzeuges. Im Falle eines lediglich dreitürigen Kraftfahrzeuges kann der Fahrzeugsitz 1 von der dargestellten Gebrauchsposition in eine vorgeschwenkte Nichtgebrauchsposition, welche allgemein auch als Easy-Entry-Position bezeichnet wird, verfahren werden. Hierzu weist der Fahrzeugsitz 1 in einem oberen Bereich der Lehne 4 einen Handgriff 8 auf, mittels dessen Betätigung sich wenigstens eine Verriegelung des Fahrzeugsitzes 1 öffnen lässt und der Fahrzeugsitz 1 in eine in Fahrtrichtung vorgelagerte Nichtgebrauchsstellung überführbar ist. Hierdurch wird dem Benutzer oder Insassen ein vergrößerter Raum zum Einsteigen und Aussteigen, insbesondere in oder aus einer hinteren Sitzreihe, bereitgestellt.

Zum Bedienen des Handgriffs 8 benötigt der Benutzer und/oder Insasse jedoch wenigstens eine freie Hand sowie die Fähigkeit den Handgriff 8 mit einer entsprechend benötigten Kraft zu bedienen. Dies kann für verletzte Personen, alte Personen, Kinder, oder Personen die ein Transportgut, wie beispielsweise einen Karton mit Lebensmitteln, in den Händen halten und dieses auf der hinteren Sitzreihe abstellen möchten, nur umständlich und unter erschwerten Bedingungen möglich sein.

In Fig. 2 ist eine schematische Darstellung eines erfindungsgemäßen Fahrzeugsitzes 1 gemäß einer beispielhaften Ausführungsform dargestellt. Der Fahrzeugsitz 1 kann beispielsweise, wie dargestellt, eine Kopfstütze 5 aufweisen.

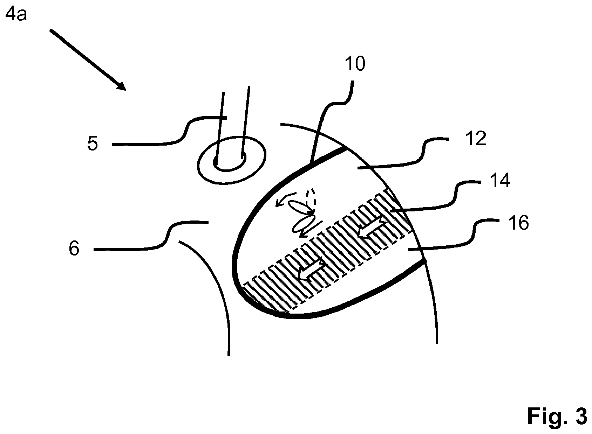

Die erfindungsgemäß vorgeschlagene Lösung sieht es vor, dass der Fahrzeugsitz 1 eine Bedienvorrichtung 10 aufweist, welche ein Anzeigeelement und eine berührungssensitive Eingabeeinrichtung umfasst. Die Bedienvorrichtung 10 ist vorliegen in einem oberen Bereich der Lehne 4 angeordnet. Der entsprechende Polsterbereich 6 der Lehne 4 ist nachfolgend in Fig. 3 ausschnittsweise vergrößert dargestellt.

In Fig. 3 ist ausschnittsweise eine schematische Darstellung der Lehne 4 des Fahrzeugsitzes 1 aus Fig. 2 gezeigt. Erkennbar ist, dass die Bedienvorrichtung 10 in einem Polsterbereich 6 nahe der Kopfstütze 5 - diese ist lediglich schematisch angedeutet - angeordnet ist.

Die Bedienvorrichtung 10 kann funktional in mehrere Bereiche unterteilt sein. So ist beispielsweise vorliegend der erste Bereich 12 zur optischen Ausgabe einer bildhaften Information über eine auswählbare zu aktivierende Funktion einsetzbar. Der zweite Bereich 14 ist vorliegend zur sensitiven Erfassung einer Eingabe, das bedeutet insbesondere zur bewegungsgesteuerten und/oder druckgesteuerten Aktivierung, einsetzbar. Die schematisch dargestellten Pfeile können als entsprechende Anleitung oder Beschreibung eines gültigen Bewegungsmusters zur Eingabe dienen. Ferner ist ein dritter Bereich 16, wie vorliegend gezeigt, vorgesehen. Der dritte Bereich 16 kann beispielsweise zur optischen Wiedergabe einer Beschreibung eines gültigen Bewegungsmusters in Textform eingerichtet sein. Weiterhin kann der dritte Bereich 16 jedoch ebenfalls sämtliche zuvor beschriebenen Merkmale bezüglich einer Ausgestaltung, sowie einer funktionalen Verwendung des ersten Bereiches 12 und/oder des zweiten Bereichs 14 aufweisen.

Ebenfalls sind weitere Bereiche oder auch weitere Darstellungsformen zur optischen Wiedergabe von Informationen über aktivierbare Funktionen des Fahrzeugsitzes und/oder des Fahrzeugs denkbar. So kann es beispielsweise vorgesehen sein, dass mit der Bedienvorrichtung 10 ebenfalls eine Einstellung einer Sitzlängsposition mittels eines an sich bekannten motorisch angetriebenen Sitzlängseinstellers aktivierbar und steuerbar ist. Die Bedienvorrichtung 10 kann um Energie zu sparen, automatisch, insbesondere zeitgesteuert, in einen Ruhezustand mit deaktivierter optischer Wiedergabe, insbesondere mit deaktiviertem Display, versetzt werden, aus welchem sich die Bedienvorrichtung 10 wiederum durch ein Berühren zurück in einen aktivierten Zustand überführen lässt. Ebenfalls kann eine akzeptierte Eingabe eines Steuerbefehls zur Aktivierung einer Funktion optisch, beispielsweise mittels eines Blinkens des Displays, erfolgen. Ebenso lassen sich Warnsignale im Falle einer Fehlbedienung oder eines Fehlers optisch mittels entsprechenden Warnhinweisen, Warnsymbolen oder farblichen Elementen darstellen und anzeigen. Im Falle einer Fehlstellung und/oder Fehlfunktion des Fahrzeugsites 1 kann die Bedienvorrichtung 10 beispielsweise ferner zur Anzeige einer Anleitung zur manuellen Fehlerbehebung nutzbar sein.

Vorzugsweise kann die Bedienvorrichtung 10 in ein Bezugsmaterial des Polsterbereichs 6 oberflächenbündig eingearbeitet sein. Die Bedienvorrichtung 10 kann in einem Randbereich mit dem umgebenen Bezugsmaterial des Polsterbereichs 6 verbunden sein, insbesondere verklebt sein. Die Bedienvorrichtung 10 kann bevorzugt eine zerstörungsresistente Oberfläche, insbesondere ein kratzfestes und nicht splitterndes Glas, aufweisen.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzkissen
- 4: Lehne
- 5: Kopfstütze
- 6: Polsterbereich
- 8: Bedienhebel
- 10: Bedienvorrichtung
- 12: erster Bereich
- 14: zweiter Bereich
- 16: dritter Bereich

## Patentansprüche

1. Fahrzeugsitz (1), insbesondere Kraftfahrzeugsitz, mit einem Sitzteil (2) und einer Lehne (4), wobei in einer Polsterung (6) der Lehne (4) eine Bedienvorrichtung (10) vorgesehen ist, wobei die Bedienvorrichtung (10) ein Anzeigeelement und eine berührungssensitive Eingabeeinrichtung umfasst und die Bedienvorrichtung (10) in einem oberen Bereich der Lehne (4) und/oder im Bereich einer einer hinteren Sitzreihe zugewandten Seite der Lehne (4) des Fahrzeugsitzes (1) angeordnet ist.

2. Fahrzeugsitz (1) gemäß Anspruch 1, wobei eine das Anzeigeelement und die Eingabeeinrichtung aufweisende Oberfläche der Bedienvorrichtung (10) in einem Bezug der Polsterung (6) bündig angeordnet ist.

3. Fahrzeugsitz (1) gemäß Anspruch 2, wobei eine das Anzeigeelement und die Eingabeeinrichtung aufweisende Oberfläche der Bedienvorrichtung (10) in einer Oberfläche des Bezuges angeordnet ist.

4. Fahrzeugsitz (1) gemäß einem der Ansprüche 2 oder 3, wobei die Bedienvorrichtung (10) in einem Randbereich mit dem umgebenen Bezugsmaterial der Polsterung (6) verbunden ist, insbesondere verklebt ist.

5. Fahrzeugsitz (1) gemäß einem der Ansprüche 1 bis 4, wobei die Bedienvorrichtung (10) in wenigstens einen ersten Bereich (12) und einen zweiten Bereich (14) unterteilt ist.

6. Fahrzeugsitz (1) gemäß Anspruch 5, wobei das Anzeigeelement und die Eingabeeinrichtung der Bedienvorrichtung (10) jeweils in verschiedenen Bereichen (12, 14) angeordnet sind.

7. Fahrzeugsitz (1) gemäß einem der Ansprüche 1 bis 6, wobei das Anzeigeelement eingerichtet ist, ein festgelegtes, unveränderliches Piktogramm wiederzugeben.

8. Fahrzeugsitz (1) gemäß Anspruch 7, wobei das Anzeigeelement durch Aufdrucken oder Einprägen dauerhaft und unveränderlich mit einem entsprechenden Piktogramm versehen ist.

9. Fahrzeugsitz (1) gemäß einem der Ansprüche 1 bis 6, wobei das Anzeigeelement ein elektronisches Bildschirmelement ist, welches eingerichtet ist, ein Piktogramm oder ein animiertes Symbol oder ein Video wiederzugeben.

10. Fahrzeugsitz (1) gemäß Anspruch 9, wobei das Anzeigeelement und die Eingabeeinrichtung der Bedienvorrichtung (10) ein gemeinsam ausgebildeter Touch-Bildschirm ist.

11. Fahrzeugsitz (1) gemäß einem der Ansprüche 9 oder 10, wobei eine Funktion aus einer Mehrzahl an vorgesehenen Funktionen, gegebenenfalls mittels eines Menüs oder einer Liste von Funktionen, auswählbar und aktivierbar ist.

12. Fahrzeugsitz (1) gemäß einem der Ansprüche 1 bis 11, wobei eine Eingabe mittels einer Wischgeste oder einer punktuellen Berührung von der Eingabeeinrichtung erfassbar ist.

13. Fahrzeugsitz (1) gemäß einem der Ansprüche 1 bis 11, wobei ein Bewegungsmuster von der Eingabeeinrichtung erfassbar und entsprechend verarbeitbar ist.

14. Fahrzeugsitz (1) gemäß einem der Ansprüche 1 bis 13, wobei die Eingabeeinrichtung eine Funktion des Fahrzeugsitzes (1) aktiviert und/oder deaktiviert und/oder steuert.

15. Fahrzeugsitz (1) gemäß Anspruch 14, wobei die Funktion des Fahrzeugsitzes (1) eine Sitzlängseinstellung oder eine Easy-Entry-Funktion oder eine Bodenfunktion ist.

## Claims

1. Vehicle seat (1), in particular motor vehicle seat, having a seat part (2) and having a backrest (4), wherein an operating device (10) is provided in a padding (6) of the backrest (4), wherein the operating device (10) comprises a display element and a touch-sensitive input device, and the operating device (10) is arranged in an upper region of the backrest (4) and/or in the region of a side, facing toward a rear seat row, of the backrest (4) of the vehicle seat (1).

2. Vehicle seat (1) according to Claim 1, wherein a surface, which has the display element and the input device, of the operating device (10) is arranged flush in a lining of the padding (6).

3. Vehicle seat (1) according to Claim 2, wherein a surface, which has the display element and the input device, of the operating device (10) is arranged in a surface of the lining.

4. Vehicle seat (1) according to either of Claims 2 and 3, wherein the operating device (10) is connected, in particular adhesively bonded, in a marginal region to the surrounding lining material of the padding (6).

5. Vehicle seat (1) according to one of Claims 1 to 4, wherein the operating device (10) is divided into at least a first region (12) and a second region (14).

6. Vehicle seat (1) according to Claim 5, wherein the display element and the input device of the operating device (10) are arranged in each case in different regions (12, 14).

7. Vehicle seat (1) according to one of Claims 1 to 6, wherein the display element is designed to show a fixed, invariable pictogram.

8. Vehicle seat (1) according to Claim 7, wherein the display element is permanently and invariably equipped with a corresponding pictogram by printing or stamping.

9. Vehicle seat (1) according to one of Claims 1 to 6, wherein the display element is an electronic screen element which is designed to show a pictogram or an animated symbol or a video.

10. Vehicle seat (1) according to Claim 9, wherein the display element and the input device of the operating device (10) are a jointly formed touchscreen.

11. Vehicle seat (1) according to either of Claims 9 and 10, wherein a function can be selected and activated from a multiplicity of provided functions, possibly by means of a menu or a list of functions.

12. Vehicle seat (1) according to one of Claims 1 to 11, wherein an input by means of a swipe gesture or a punctiform touch action can be detected by the input device.

13. Vehicle seat (1) according to one of Claims 1 to 11, wherein a movement pattern can be detected and correspondingly processed by the input device.

14. Vehicle seat (1) according to one of Claims 1 to 13, wherein the input device activates and/or deactivates and/or controls a function of the vehicle seat (1).

15. Vehicle seat (1) according to Claim 14, wherein the function of the vehicle seat (1) is a seat longitudinal adjustment or an easy entry function or a floor function.

## Revendications

1. Siège de véhicule (1), notamment siège de véhicule automobile, comprenant une partie d'assise (2) et un dossier (4), un arrangement d'opération (10) se trouvant dans un capitonnage (6) du dossier (4), l'arrangement d'opération (10) comportant un élément d'affichage et un dispositif de saisie tactile et l'arrangement d'opération (10) étant disposé dans une zone supérieure du dossier (4) et/ou dans la zone d'un côté du dossier (4) du siège de véhicule (1) qui fait face à une rangée de sièges arrière.

2. Siège de véhicule (1) selon la revendication 1, une surface de l'arrangement d'opération (10) qui présente l'élément d'affichage et le dispositif de saisie étant disposée affleurante dans une garniture du capitonnage (6) .

3. Siège de véhicule (1) selon la revendication 2, une surface de l'arrangement d'opération (10) qui présente l'élément d'affichage et le dispositif de saisie étant disposée dans une surface de la garniture.

4. Siège de véhicule (1) selon l'une des revendications 2 et 3, l'arrangement d'opération (10) étant relié, notamment collé, dans une zone de bordure avec le matériau de revêtement environnant du capitonnage (6) .

5. Siège de véhicule (1) selon l'une des revendications 1 à 4, l'arrangement d'opération (10) étant subdivisé en au moins une première zone (12) et une deuxième zone (14).

6. Siège de véhicule (1) selon la revendication 5, l'élément d'affichage et le dispositif de saisie de l'arrangement d'opération (10) étant respectivement disposés dans des zones (12, 14) différentes.

7. Siège de véhicule (1) selon l'une des revendications 1 à 6, l'élément d'affichage étant conçu pour reproduire un pictogramme défini non modifiable.

8. Siège de véhicule (1) selon la revendication 7, l'élément d'affichage étant pourvu durablement et inaltérablement d'un pictogramme correspondant par impression ou estampage.

9. Siège de véhicule (1) selon l'une des revendications 1 à 6, l'élément d'affichage étant un élément d'écran électronique qui est conçu pour reproduire un pictogramme ou un symbole animé ou une vidéo.

10. Siège de véhicule (1) selon la revendication 9, l'élément d'affichage et le dispositif de saisie de l'arrangement d'opération (10) étant un écran tactile de configuration commune.

11. Siège de véhicule (1) selon l'une des revendications 9 et 10, une fonction parmi une pluralité de fonctions prévues pouvant être sélectionnée et activée, le cas échéant au moyen d'un menu ou d'une liste de fonctions.

12. Siège de véhicule (1) selon l'une des revendications 1 à 11, une saisie pouvant être détectée par le dispositif de saisie au moyen d'un geste d'effleurement ou d'un contact ponctuel.

13. Siège de véhicule (1) selon l'une des revendications 1 à 11, un modèle de mouvement pouvant être détecté par le dispositif de saisie et pouvant être traité en conséquence.

14. Siège de véhicule (1) selon l'une des revendications 1 à 13, le dispositif de saisie activant et/ou désactivant et/ou commandant une fonction du siège de véhicule (1).

15. Siège de véhicule (1) selon la revendication 14, la fonction du siège de véhicule (1) étant un réglage longitudinal du siège ou une fonction de saisie simplifiée ou une fonction de plancher.
